# EUROPEAN PATENT APPLICATION

(11) **EP 4 757 002 A1**
(43) Date of publication of application: **10.06.2026**
(21) Application number: 25213524.9
(22) Date of filing: 05.11.2025
(51) Int. Cl.: H01M 10/6555, F28F 13/08, H01M 10/613, H01M 10/625, H01M 10/6556, H01M 10/6557, H01M 10/6568, F28F 1/02, F28F 9/02

(54) **POWER STORAGE DEVICE**

(30) Priority: 04.12.2024 JP 2024211719
(71) Applicant: TOYOTA JIDOSHA KABUSHIKI KAISHA, Toyota-shi, Aichi-ken 471-8571 (JP)
(72) Inventor: YAMASHITA, Osamu, Toyota-shi, 471-8571 (JP); MORI, Shinichiro, Toyota-shi, 471-8571 (JP); SHIMIZU, Koji, Toyota-shi, 471-8571 (JP); FUJISHIMA, Seigo, Toyota-shi, 471-8571 (JP); KITO, Sumiko, Toyota-shi, 471-8571 (JP); ISHIKAWA, Shinya, Toyota-shi, 471-8571 (JP); TOMITA, Shintaro, Toyota-shi, 471-8571 (JP); YAMASHITA, Yuji, Toyota-shi, 471-8571 (JP); KIMURA, Kenta, Toyota-shi, 471-8571 (JP)
(74) Representative: TBK

(57) **Abstract**

A power storage device (2) includes: a plurality of power storage cells (29); and a first heat exchanger (32A) and a second heat exchanger (32B) that cool the plurality of power storage cells (29) and extend in an extension direction. The first heat exchanger (32A) includes: a first heat medium path (53A) that extends in the extension direction and allows a heat medium to flow in the first heat exchanger (32A); and a first recess (71A) formed to decrease a flow path area of the first heat medium path (53A). The second heat exchanger (32B) includes: a second heat medium path (53B) that extends in the extension direction and allows the heat medium to flow in the second heat exchanger (32B); and a second recess (71B) formed to decrease a flow path area of the second heat medium path (53B). A depth of the first recess (71A) is different from a depth of the second recess (71B).

## Description

### CROSS REFERENCE TO RELATED APPLICATIONS

This nonprovisional application is based on Japanese Patent Application No. 2024-211719 filed on December 4, 2024 with the Japan Patent Office, the entire contents of which are hereby incorporated by reference.

### BACKGROUND

### Field

The present disclosure relates to a power storage device.

### Description of the Background Art

Various types of power storage devices have been conventionally proposed. For example, a battery cooling system described in Japanese Patent Laying-Open No. 2023-162547 includes a first cooling circuit having a first cooling portion that cools a first battery with cooling water, and a second cooling circuit branching off from the first cooling circuit and having a second cooling portion that cools a second battery with cooling water.

The battery cooling system also includes a pressure loss adjustment portion that is provided in the second cooling circuit and adjusts a pressure loss. The pressure loss adjustment portion makes a pressure loss of the cooling water flowing in the second cooling circuit higher, as compared with the case in which the pressure loss adjustment portion is not provided in the second cooling circuit. A stepped pipe is adopted as the pressure loss adjustment portion.

### SUMMARY

In the above-described battery cooling system, the stepped pipe is adopted as the pressure loss adjustment portion. If the stepped pipe is adopted as the pressure loss adjustment portion in each of the first cooling circuit and the second cooling circuit, pipes of various sizes need to be prepared. Generally, it is difficult to have a large assortment of pipes of different diameters, and the pressure loss adjustment portions are usually formed by pipes of different diameters that can be prepared. This causes a difference between a flow rate of refrigerant flowing in the first cooling circuit and a flow rate of refrigerant flowing in the second cooling circuit, and temperature variation tends to occur in the first battery and the second battery.

The present disclosure has been made in view of the above-described problem and an object thereof is to provide a power storage device capable of cooling a plurality of power storage cells, wherein the occurrence of temperature variation in the power storage cells can be suppressed.

A power storage device includes: a plurality of power storage cells; and a first heat exchanger and a second heat exchanger that cool the plurality of power storage cells and extend in an extension direction. The first heat exchanger includes: a first heat medium path that extends in the extension direction and allows a heat medium to flow in the first heat exchanger; and a first recess formed to decrease a flow path area of the first heat medium path. The second heat exchanger includes: a second heat medium path that extends in the extension direction and allows the heat medium to flow in the second heat exchanger; and a second recess formed to decrease a flow path area of the second heat medium path. A depth of the first recess is different from a depth of the second recess.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 schematically shows a vehicle 1 having a power storage device 2 mounted thereon.
Fig. 2 is an exploded perspective view showing power storage device 2.
Fig. 3 is a perspective view showing a power storage cell 29.
Fig. 4 is a plan view showing a cooling device 12 and the like.
Fig. 5 is a perspective view showing cooling device 12.
Fig. 6 is a plan view showing heat exchangers 32A, 32B and 32C and power storage cells 29A, 29B, 29C, and 29D.
Fig. 7 is an exploded perspective view showing heat exchanger 32A and heat exchanger 32C, and power storage cells 29A, 29B, 29C, and 29D.
Fig. 8 is a front view visualizing a part of heat exchanger 32A.
Fig. 9 is a front view showing heat exchanger 32A.
Fig. 10 is a plan view showing configurations of recesses 71A, 71B and 71C and surroundings thereof.
Fig. 11 is a front view of heat exchanger 32A provided in a power storage device according to a first modification.
Fig. 12 is a plan view showing a part of cooling device 12 provided in a power storage device according to a second modification.

### DESCRIPTION OF THE PREFERRED EMBODIMENTS

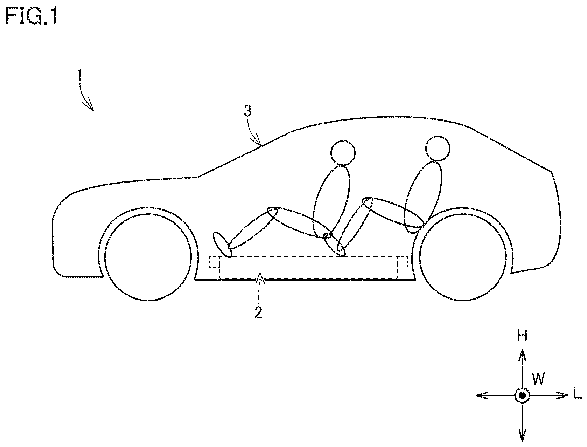

An embodiment of the present disclosure will be described with reference to Figs. 1 to 12. In the drawings referenced below, the same or corresponding components are denoted by the same reference numerals.

Fig. 1 schematically shows a vehicle 1 having a power storage device 2 mounted thereon. Vehicle 1 includes a vehicle main body 3 and power storage device 2 is mounted at the bottom of vehicle main body 3.

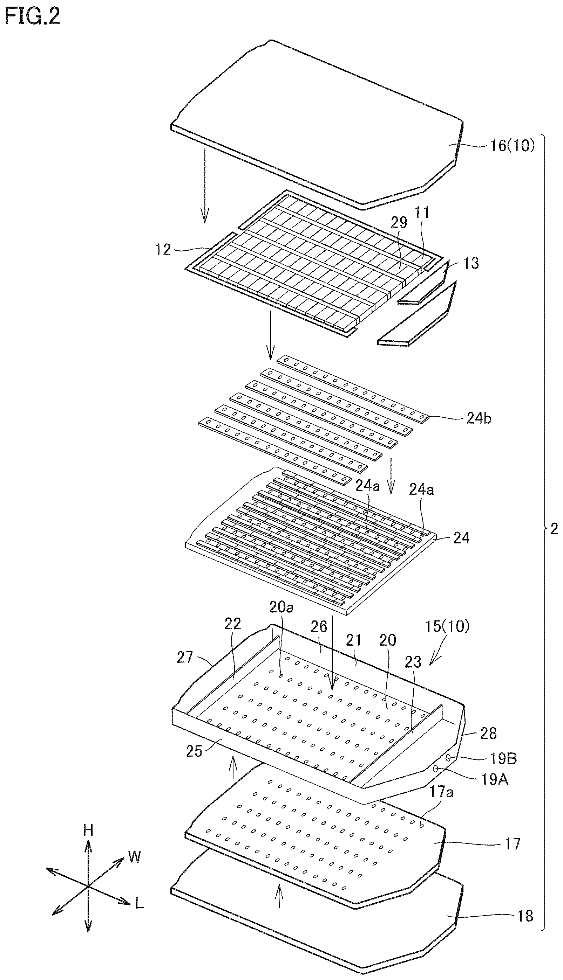

Fig. 2 is an exploded perspective view showing power storage device 2. In Fig. 2, a width direction W corresponds to a width direction of power storage device 2 and also corresponds to a vehicle width direction of vehicle 1. A front-rear direction L corresponds to a front-rear direction of power storage device 2 and also corresponds to a front-rear direction of vehicle 1. An up-down direction H corresponds to an up-down direction in a vertical direction.

Power storage device 2 includes an accommodation case 10, a power storage module 11, a cooling device 12, and an electrical device 13. Accommodation case 10 includes a lower case 15, an upper case 16, an insulating plate 17, and a share panel 18.

Lower case 15 is formed to open upward, and upper case 16 is provided to close the opening of lower case 15.

Lower case 15 includes a bottom plate 20, a perimeter wall 21, partition walls 22 and 23, and an insulating plate 24.

Bottom plate 20 is formed to have a plate shape. Perimeter wall 21 is formed along a perimeter edge of bottom plate 20. Perimeter wall 21 includes a side wall 25, a side wall 26, an end plate 27, and an end plate 28.

Side wall 25 and side wall 26 are disposed to be arranged in width direction W, and side wall 25 and side wall 26 are formed to extend in front-rear direction L.

End plate 27 and end plate 28 are spaced apart from each other in front-rear direction L, and end plate 27 and end plate 28 are formed to extend in width direction W. End plate 27 connects one end of side wall 25 and one end of side wall 26 to each other, and end plate 28 connects one end of side wall 25 and one end of side wall 26 to each other.

Each of side wall 25, side wall 26, end plate 27, and end plate 28 is provided with a fixing portion described below, and each fixing portion is fixed to vehicle main body 3.

Partition wall 22 and partition wall 23 are disposed in a region surrounded by bottom plate 20 and perimeter wall 21. Partition wall 22 is disposed adjacent to end plate 27 and partition wall 22 is formed to extend in width direction W.

Partition wall 23 is spaced apart from end plate 28 in front-rear direction L. End plate 28 is also formed to extend in width direction W.

End plate 28 is provided with breathable membranes 19A and 19B. Each of breathable membranes 19A and 19B is a waterproof air-permeable membrane and each of breathable membranes 19A and 19B is made of, for example, Gore-Tex (registered trademark) or the like.

Insulating plate 24 is disposed on a portion of an upper surface of bottom plate 20 located between partition wall 22 and partition wall 23. A plurality of openings 24a are formed in insulating plate 24. Insulating plate 24 is provided with an insulating protection body 24b that closes these openings 24a.

Insulating plate 17 is fixed to a lower surface of bottom plate 20 and a plurality of openings 17a are also formed in insulating plate 17.

A plurality of openings 20a are also formed in bottom plate 20. Openings 24a, openings 20a and openings 17a are mutually arranged in the up-down direction.

Share panel 18 is disposed below insulating plate 17 and a perimeter edge of share panel 18 is fixed to the lower surface of bottom plate 20. Share panel 18 is formed to cover insulating plate 17 and the lower surface of bottom plate 20.

Power storage module 11 is disposed on an upper surface of insulating plate 24. Electrical device 13 is disposed between partition wall 23 and end plate 28.

Power storage module 11 includes a plurality of power storage cells 29. The plurality of power storage cells 29 are arranged to be spaced apart from one another in front-rear direction L, and are arranged to be spaced apart from one another in width direction W.

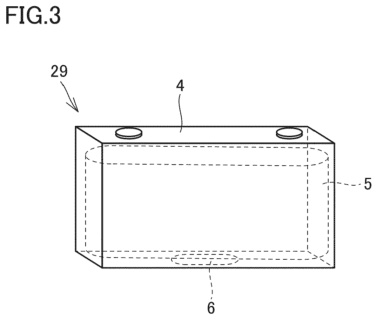

Fig. 3 is a perspective view showing power storage cell 29. Power storage cell 29 includes a cell case 4 and an electrode assembly 5 accommodated in cell case 4. Cell case 4 includes a bottom plate and a smoke discharge valve 6 is formed on the bottom plate of cell case 4. Each power storage cell 29 is disposed such that smoke discharge valve 6 is located above opening 24a of insulating plate 24 shown in Fig. 2.

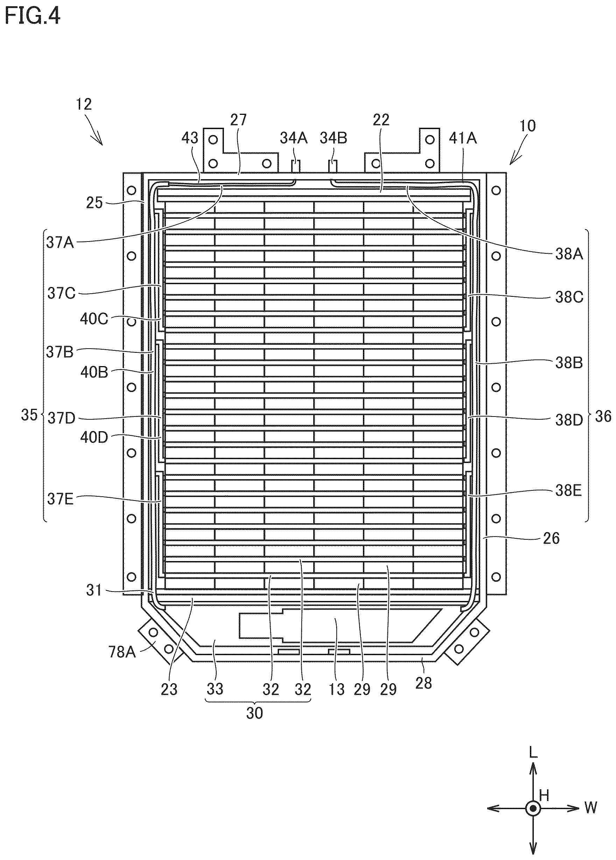

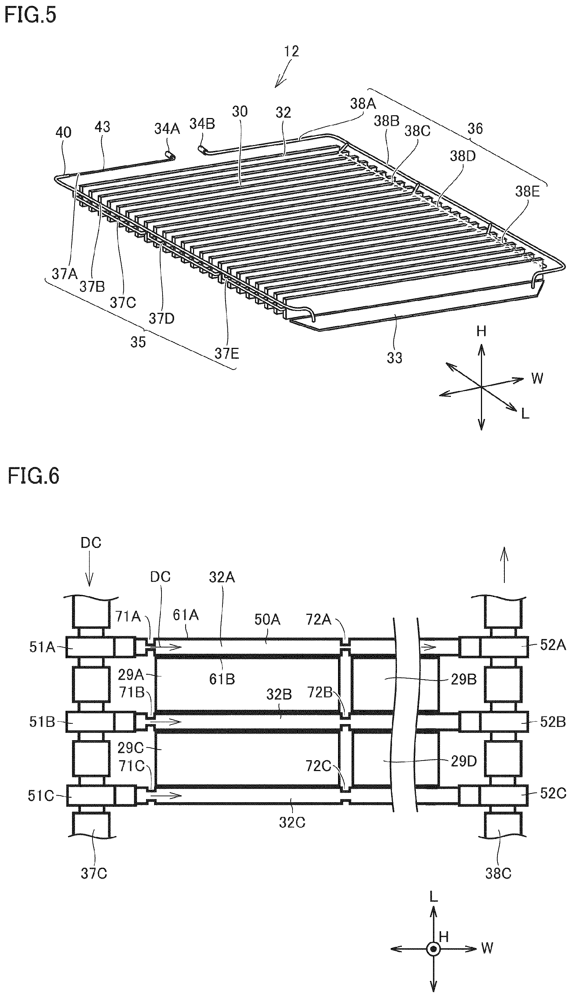

Fig. 4 is a plan view showing cooling device 12 and the like, and Fig. 5 is a perspective view showing cooling device 12. In Fig. 5, power storage cells 29 and the like are not shown.

Referring to Figs. 4 and 5, cooling device 12 includes a heat exchange unit 30 and a heat medium pipe 31. Heat exchange unit 30 includes a plurality of heat exchangers 32 and a heat exchanger 33.

The plurality of heat exchangers 32 are spaced apart from one another in front-rear direction L. Each of heat exchangers 32 is disposed to extend in width direction W.

The plurality of power storage cells 29 arranged in width direction W are disposed between heat exchangers 32 adjacent to each other in front-rear direction L.

Heat medium pipe 31 is disposed in accommodation case 10 and heat medium pipe 31 includes a supply pipe 35 and a discharge pipe 36.

Supply pipe 35 is connected to an inflow portion 34A. Inflow portion 34A is inserted into an insertion hole formed in end plate 27 and is fixed to end plate 27.

Supply pipe 35 includes a main supply pipe 37A, a main supply pipe 37B, and branch pipes 37C, 37D and 37E.

Main supply pipe 37A is disposed between partition wall 22 and end plate 27, and is disposed to extend in width direction W. Main supply pipe 37A is formed to extend toward side wall 25.

Main supply pipe 37B is connected to an end of main supply pipe 37A and is formed to extend in front-rear direction L along side wall 25.

Each of branch pipes 37C, 37D and 37E is disposed below main supply pipe 37B and is connected to main supply pipe 37B. Branch pipes 37C, 37D and 37E are spaced apart from one another in front-rear direction L.

A connection portion that connects main supply pipe 37B and branch pipe 37C, a connection portion that connects main supply pipe 37B and branch pipe 37D, and a connection portion that connects main supply pipe 37B and branch pipe 37E are spaced apart from one another in front-rear direction L.

The plurality of heat exchangers 32 spaced apart from one another in front-rear direction L are connected to branch pipe 37C. Similarly, the plurality of heat exchangers 32 spaced apart from one another in front-rear direction L are also connected to each of branch pipes 37D and 37E.

Heat exchanger 33 is connected to an end of main supply pipe 37B on the end plate 28 side. Heat exchanger 33 is disposed on a portion of the upper surface of bottom plate 20 located between partition wall 23 and end plate 28. An insulating plate is disposed between heat exchanger 33 and bottom plate 20. Electrical device 13 is disposed on an upper surface of heat exchanger 33. Electrical device 13 includes, for example, a battery ECU, a junction box and the like.

Discharge pipe 36 includes a main discharge pipe 38A, a main discharge pipe 38B, and branch pipes 38C, 38D and 38E.

Discharge pipe 36 is connected to an outflow portion 34B. Outflow portion 34B is inserted into an insertion hole formed in end plate 27 and is fixed to end plate 27. An insertion hole 39A and an insertion hole 39B are spaced apart from each other in width direction W.

Main discharge pipe 38A is disposed between partition wall 22 and end plate 27, is disposed to extend in width direction W, and is formed to extend toward side wall 26.

Main discharge pipe 38B is connected to an end of main discharge pipe 38B and is formed to extend along side wall 26.

Each of branch pipes 38C, 38D and 38E is disposed below main discharge pipe 38B and is connected to main supply pipe 37B. Branch pipes 38C, 38D and 38E are spaced apart from one another in front-rear direction L.

The plurality of heat exchangers 32 spaced apart from one another in front-rear direction L are connected to branch pipe 38C. Similarly, the plurality of heat exchangers 32 spaced apart from one another in front-rear direction L are also connected to each of branch pipes 38D and 38E. Heat exchanger 33 is connected to an end of main discharge pipe 38B on the end plate 28 side.

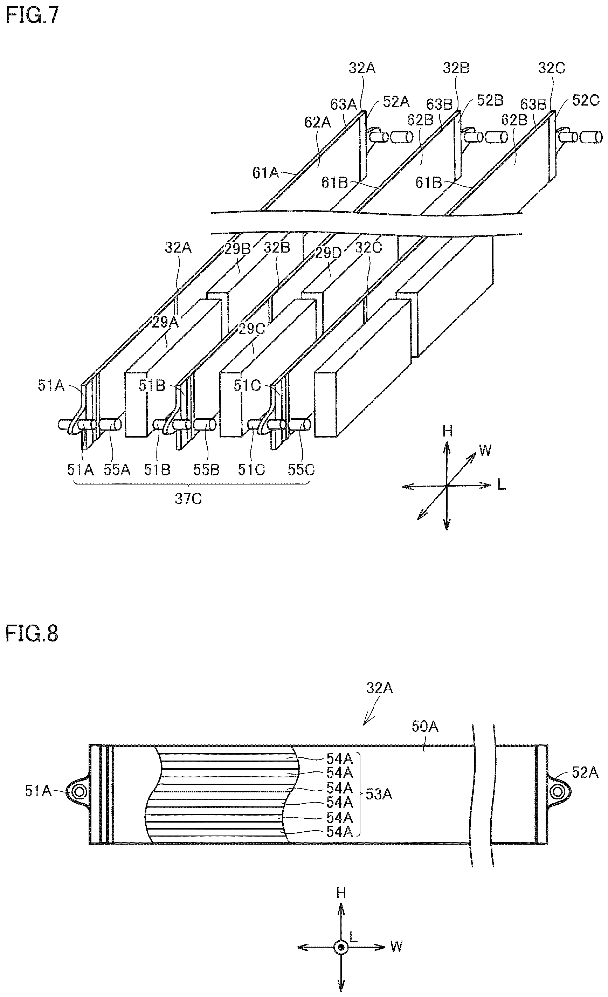

Fig. 6 is a plan view showing heat exchangers 32A, 32B and 32C, and power storage cells 29A, 29B, 29C, and 29D. Fig. 7 is an exploded perspective view showing heat exchanger 32A and heat exchanger 32C, and power storage cells 29A, 29B, 29C, and 29D.

Heat exchanger 32A includes a main body 50A, a supply pipe portion 51A and a discharge pipe portion 52A.

Main body 50A is formed to have a plate shape and main body 50A is formed to extend in width direction W.

Supply pipe portion 51A is provided at one end in width direction W and discharge pipe portion 52A is provided at the other end in width direction W.

Main body 50A is formed to have a plate shape and is formed to extend in width direction W. Heat exchanger 32A includes a first main surface 61A, a second main surface 62A, an upper surface 63A, and a lower surface.

Heat exchanger 32B and heat exchanger 32C are also configured similarly to heat exchanger 32A. Power storage cell 29A and power storage cell 29B are disposed between heat exchanger 32A and heat exchanger 32B, and are spaced apart from each other in width direction W.

Of the plurality of power storage cells disposed between heat exchanger 32A and heat exchanger 32B, power storage cell 29A is located closest to branch pipe 37C.

Power storage cell 29C and power storage cell 29D are disposed between heat exchanger 32B and heat exchanger 32C, and power storage cell 29C and power storage cell 29D are spaced apart from each other in width direction W.

Of the plurality of power storage cells disposed between heat exchanger 32B and heat exchanger 32C, power storage cell 29C is disposed closest to branch pipe 37C.

Power storage cell 29A and power storage cell 29C face each other with heat exchanger 32B being interposed therebetween, and power storage cell 29B and power storage cell 29D face each other with heat exchanger 32B being interposed therebetween.

In Fig. 7, branch pipe 37C includes supply pipe portion 51A, a supply pipe portion 51B, a supply pipe portion 51C, a connecting pipe 55A, and a connecting pipe 55B.

Connecting pipe 55A connects supply pipe portion 51A and supply pipe portion 51B to each other and connecting pipe 55B connects supply pipe portion 51B and supply pipe portion 51C to each other. A heat medium C flowing in branch pipe 37C flows into the plurality of heat exchangers 32A, 32B and 32C.

Fig. 8 is a front view visualizing a part of heat exchanger 32A. A heat medium path 53A is formed in main body 50A. Heat medium path 53A includes a plurality of narrow paths 54A arranged in up-down direction H.

A heat medium path through which heat medium C flows is formed in supply pipe portion 51A and this heat medium path of supply pipe portion 51A communicates with heat medium path 53A of main body 50A.

Heat exchanger 32B is also configured similarly to heat exchanger 32A and heat exchanger 32B includes supply pipe portion 51B provided on the one end side in width direction W. A refrigerant path is also formed in a main body of heat exchanger 32B and the refrigerant path of heat exchanger 32B also includes a plurality of narrow paths arranged in the up-down direction. Heat exchanger 32C is also formed similarly to heat exchanger 32A and heat exchanger 32B.

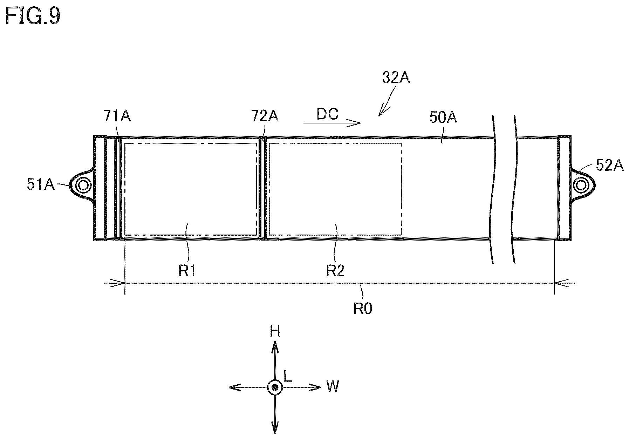

Fig. 9 is a front view showing heat exchanger 32A. A first recess 71A and a third recess 72A are formed in heat exchanger 32A. First recess 71A is formed at a position of main body 50A adjacent to supply pipe portion 51A. Third recess 72A is formed at a position farther than first recess 71A to the discharge pipe portion 52A side.

Second main surface 62A includes a placement region R0 where the plurality of power storage cells are disposed. Placement region R0 includes a contact region R1 with which power storage cell 29A is in contact, and a contact region R2 with which power storage cell 29B is in contact.

In a flow direction DC of heat medium C in heat exchanger 32A, first recess 71A is formed upstream of contact region R1.

In flow direction DC of heat medium C in heat exchanger 32A, third recess 72A is formed in a portion located between contact region R1 and contact region R2.

Similarly to heat exchanger 32A, a second recess 71B and a fourth recess 72B are also formed in heat exchanger 32B. Similarly to heat exchanger 32A, a fifth recess 71C and a sixth recess 72C are also formed in heat exchanger 32C.

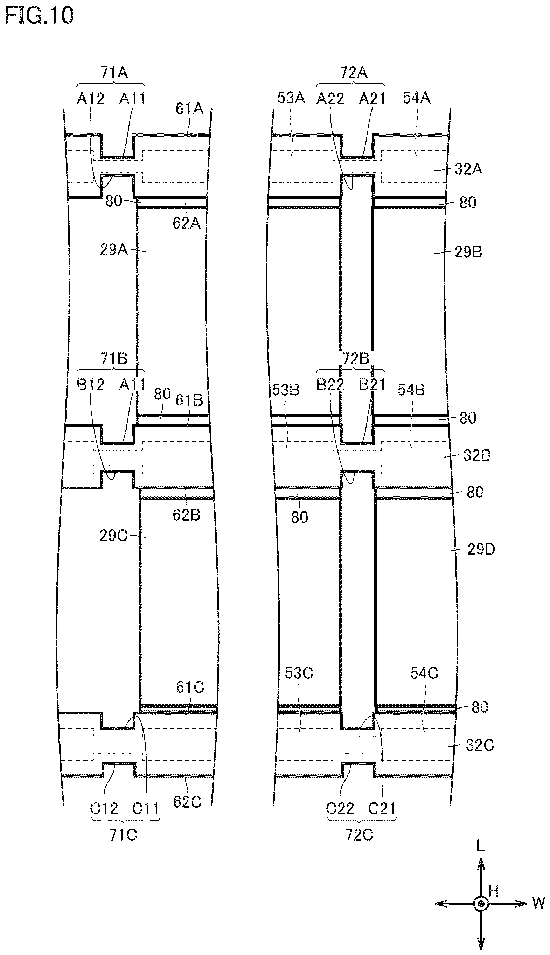

Fig. 10 is a plan view showing configurations of recesses 71A, 71B and 71C and surroundings thereof.

First recess 71A, second recess 71B and fifth recess 71C are arranged in front-rear direction L. In addition, third recess 72A, fourth recess 72B and sixth recess 72C are arranged in front-rear direction L.

First recess 71A includes a recess A11 formed in first main surface 61A, and a recess A12 formed in second main surface 62A.

Third recess 72A includes a recess A21 formed in first main surface 61A, and a recess A22 formed in second main surface 62A.

A depth of each of recess A11 and recess A12 is a depth D1A and a depth of first recess 71A is a total (total depth TDA1) of the depth of recess A11 and the depth of recess A12.

A depth of each of recess A21 and recess A22 is a depth D2A and a depth of third recess 72A is a total (total depth TDA2) of the depth of recess A21 and the depth of recess A22.

Second recess 71B includes a recess A11 formed in a third main surface 61B, and a recess B 12 formed in a fourth main surface 62B.

Fourth recess 72B includes a recess B21 formed in third main surface 61B, and a recess B22 formed in fourth main surface 62B.

A depth of each of recess B11 and recess B12 is a depth D1B and a depth of second recess 71B is a total (total depth TDB1) of the depth of recess B11 and the depth of recess B 12.

A depth of each of recess B21 and recess B22 is a depth D2B and a depth of fourth recess 72B is a total (total depth TDB2) of the depth of recess B21 and the depth of recess B22.

Fifth recess 71C includes a recess C11 formed in a fifth main surface 61C, and a recess C12 formed in a sixth main surface 62C.

Sixth recess 72C includes a recess C21 formed in fifth main surface 61C, and a recess C22 formed in sixth main surface 62C.

A depth of each of recess C11 and recess C12 is a depth D1C and a depth of fifth recess 71C is a total (total depth TDC1) of the depth of recess C11 and the depth of recess C12.

A depth of each of recess C21 and recess C22 is a depth D2C and a depth of sixth recess 72C is a total (total depth TDC2) of the depth of recess C21 and the depth of recess C22.

Heat exchanger 32A is disposed upstream of heat exchanger 32B in flow direction DC and total depth TDA1 is deeper than total depth TDB1. In addition, total depth TDA2 is deeper than total depth TDB2. Depth D1A is deeper than depth D1B and depth D2A is deeper than depth D2B.

Similarly, heat exchanger 32B is disposed upstream of heat exchanger 32C in flow direction DC and total depth TDB1 is deeper than total depth TDC1. In addition, total depth TDB2 is deeper than total depth TDC2. Depth D1B is deeper than depth D1C and depth D2B is deeper than depth D2C.

First recess 71A is formed to decrease a flow path area of the plurality of narrow paths 54A. Similarly to first recess 71A, third recess 72A is also formed to decrease a flow path area of the plurality of narrow paths 54A. Specifically, third recess 72A is formed to decrease the flow path area of all of narrow paths 54 arranged in up-down direction H.

First recess 71A and third recess 72A can, for example, be easily formed by pressing a pressure roller against first main surface 61A and second main surface 62A of heat exchanger 32A from the outside. By adjusting the pressing force at which the pressure roller is pressed against first main surface 61A and second main surface 62A, the depths of first recess 71A and third recess 72A can be adjusted.

Second recess 71B and fourth recess 72B formed in heat exchanger 32B are also formed to decrease a flow path area of narrow paths 54B of a refrigerant path 53B formed in heat exchanger 32B. Similarly, fifth recess 71C and sixth recess 72C formed in heat exchanger 32C are also formed to decrease a flow path area of narrow paths 54C of a refrigerant path 53C formed in heat exchanger 32C.

The flow path area of refrigerant path 53A in the portion where first recess 71A and third recess 72A are located is smaller than the flow path area of refrigerant path 53B in the portion where second recess 71B and fourth recess 72B are located. Similarly, the flow path area of refrigerant path 53B in the portion where second recess 71B and fourth recess 72B are located is smaller than the flow path area of refrigerant path 53C in the portion where fifth recess 71C and sixth recess 72C are located.

In Fig. 10, an elastic member 80 is disposed between power storage cells 29A and 29B and heat exchangers 32A and 32B. Similarly, elastic member 80 is also disposed between power storage cells 29C and 29D and heat exchangers 32A and 32B. Elastic member 80 is an insulating member. Elastic member 80 may have the heat insulation property. It should be noted that elastic member 80 is not an essential component and elastic member 80 does not necessarily need to be provided.

In power storage device 2 configured as described above, when cooling device 12 shown in Fig. 4 is driven, heat medium C flows from inflow portion 34A into heat medium pipe 31 and heat medium C flows in heat medium pipe 31.

Heat medium C flows through supply pipe portion 51A and supply pipe portion 51B and flows from supply pipe portion 51B into main supply pipes 37A and 37B and branch pipe 37C.

In Fig. 6, heat medium C flowing into branch pipe 37C flows into heat exchanger 32A. In heat exchanger 32A, first recess 71A and third recess 72A are formed in this order in flow direction DC in heat exchanger 32A. Therefore, a pressure loss at each position in heat exchanger 32A can be adjusted. By forming the plurality of recesses, equalization of a flow velocity of heat medium C flowing in heat exchanger 32A can be achieved. This can cause a temperature difference in the power storage cells. Sometimes low-temperature heat medium C flows in heat exchanger 32A, and sometimes high-temperature heat medium C flows in heat exchanger 32A, which causes heat exchanger 32A to extend and contract. Since the plurality of first recesses 71A and third recesses 72A are formed in heat exchanger 32A in the direction in which heat exchanger 32A extends, heat exchanger 32A can extend and contract in the direction in which heat exchanger 32A extends. Thus, damage of heat exchanger 32A caused by thermal stress is suppressed. A similar effect can also be obtained in the other heat exchangers.

When heat exchanger 32A cools power storage cells 29, the temperature of heat medium C is low. Since the temperature of heat medium C passing through first recess 71A is lower than the temperature of heat medium C passing through third recess 72A, the flow resistance of heat medium C in first recess 71A is high. In contrast, in third recess 72A, heat medium C tends to be warmed by heat from power storage cells 29 and the flow resistance of heat medium C is low.

When the temperature of heat medium C is high, the flow resistance in first recess 71A is relatively low and the flow resistance in third recess 72A is relatively high.

As described above, first recess 71A and third recess 72A formed in heat exchanger 32A are spaced apart from each other in width direction W. Therefore, even when the temperature of heat medium C changes, great variation in flow resistance of heat exchanger 32A formed by first recess 71A and third recess 72A can be suppressed.

Heat medium C flowing into branch pipe 37C flows into heat exchangers 32A, 32B and 32C sequentially.

Heat exchanger 32A is located upstream of heat exchanger 32B in flow direction DC in branch pipe 37C and the flow resistance of heat medium C from inflow portion 34A to heat exchanger 32A is lower than the flow resistance of heat medium C from inflow portion 34A to heat exchanger 32B.

In Fig. 10, total depth TDA1 of first recess 71A is deeper than total depth TDB1 of second recess 71B and total depth TDA2 of third recess 72A is deeper than total depth TDB2 of fourth recess 72B. As a result, the flow resistance of heat medium C in heat exchanger 32A is higher than the flow resistance of heat medium C in heat exchanger 32B.

As a result, the occurrence of a difference between a flow rate of heat medium C flowing in heat exchanger 32A and a flow rate of heat medium C flowing in heat exchanger 32B can be suppressed.

Similarly, the occurrence of a difference between a flow rate of heat medium C flowing in heat exchanger 32C and a flow rate of heat medium C flowing in heat exchanger 32D can be suppressed.

Power storage cells 29A to 29D are deformed to expand and contract as a result of charging and discharging. First recess 71A is disposed upstream of placement region R0 in flow direction DC. Therefore, even when power storage cells 29A to 29D is deformed as a result of charging and discharging, deformation of first recess 71A is suppressed.

In addition, third recess 72A is disposed between contact region R1 and contact region R2. Therefore, even when the power storage cells are deformed as a result of charging and discharging, deformation of third recess 72A is suppressed.

Since deformation of each of first recess 71A and third recess 72A is suppressed as described above, variation in flow resistance of heat medium C in heat exchanger 32A can be suppressed.

Of the plurality of power storage cells 29 disposed between heat exchanger 32A and heat exchanger 32B, power storage cell 29 located at the center in width direction W tends to increase in temperature.

Therefore, power storage cell 29 disposed in placement region R0 tends to temperature-expand. Since second recess 71B is disposed at the position distant from placement region R0, deformation of second recess 71B is suppressed.

First recess 71A includes recess A11 formed in first main surface 61A, and recess A12 formed in second main surface 62A. Therefore, the occurrence of a difference between the rigidity on the first main surface 61A side and the rigidity on the second main surface 62A side in power storage cell 29A can be suppressed.

Similarly, third recess 72A includes recess A21 formed in first main surface 61A, and recess A12 formed in second main surface 62A. Therefore, the occurrence of a difference between the rigidity of first main surface 61A and the rigidity of second main surface 62A can be suppressed.

Since each of first recess 71A and third recess 72A is formed to decrease the flow path area of all of heat medium pipes 31 arranged in up-down direction H, the occurrence of variation in cooling performance of heat exchanger 32A in up-down direction H can be suppressed. In the above-described embodiment, the depth of first recess 71A may be different from the depth of third recess 72A. For example, the depth of third recess 72A may be shallower than the depth of first recess 71A. Since power storage cell 29B is disposed closer to the center of the power storage device than power storage cell 29A, the temperature of power storage cell 29B tends to become higher than the temperature of power storage cell 29A. As a result, power storage cell 29B tends to expand as compared with power storage cell 29A and narrow paths 54A in the vicinity of power storage cell 29B tend to be narrowed. By making the depth of third recess 72A shallower, excessive increase in flow resistance of heat exchanger 32A in the vicinity of power storage cell 29B can be suppressed.

### (First Modification)

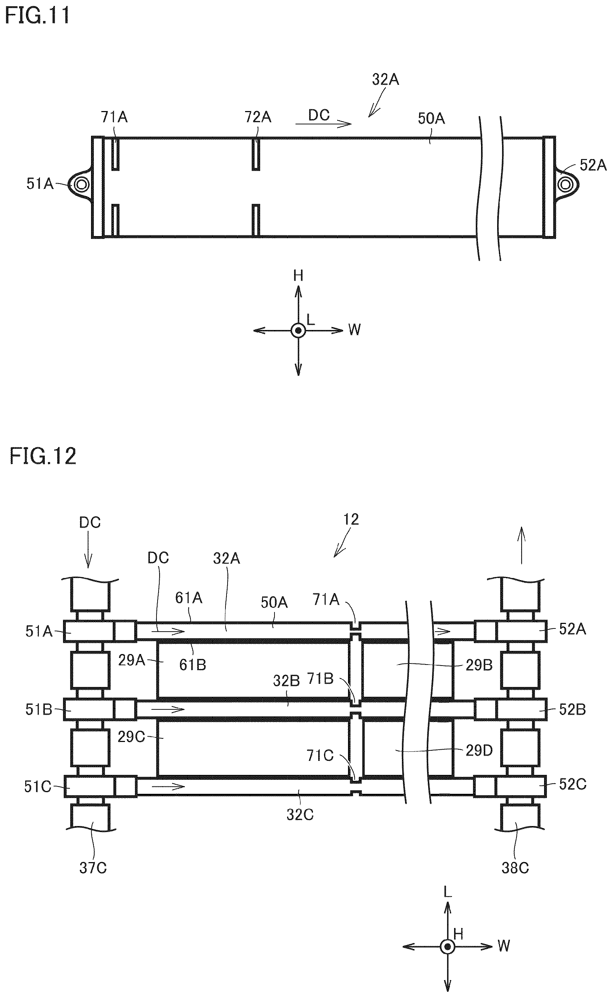

A power storage device according to a first modification will be described with reference to Fig. 11. Fig. 11 is a front view of heat exchanger 32A provided in the power storage device according to the first modification. In the example shown in Fig. 11, first recess 71A formed in heat exchanger 32A is formed in a dashed line in up-down direction H. As described above, various shapes can be adopted as the shape of first recess 71A.

For example, first recess 71A may be formed on the upper/lower end side in up-down direction H in heat exchanger 32A. Each power storage cell 29 tends to increase in temperature at the center in up-down direction H. Thus, by ensuring a flow rate of heat medium C at the center in up-down direction H, the occurrence of temperature variation in power storage cells 29 in up-down direction H can be suppressed. Not only first recess 71A but also other recesses 72A, 71B, 72B and the like may be formed in a dashed line.

### (Second Modification)

A power storage device according to a second modification will be described with reference to Fig. 12. Fig. 12 is a plan view showing a part of cooling device 12 provided in the power storage device according to the second modification. In this cooling device 12, first recess 71A is formed between power storage cell 29A and power storage cell 29B in flow direction DC in heat exchanger 32A. In addition, second recess 71B is formed between power storage cell 29A and power storage cell 29B in flow direction DC in heat exchanger 32B. Fifth recess 71C is also formed between power storage cell 29C and power storage cell 29D in flow direction DC in heat exchanger 32C. Such cooling device 12 can also achieve equalization of the flow rates of heat medium C flowing in heat exchangers 32A, 32B and 32C.

Although the embodiment of the present disclosure has been described, it should be understood that the embodiment disclosed herein is illustrative and non-restrictive in every respect. The scope of the present disclosure is defined by the terms of the claims and is intended to include any modifications within the scope and meaning equivalent to the terms of the claims.

## Claims

1. A power storage device (2) comprising:
a plurality of power storage cells (29); and
a first heat exchanger (32A) and a second heat exchanger (32B) that cool the plurality of power storage cells (29) and extend in an extension direction, wherein
the first heat exchanger (32A) includes:
a first heat medium path (53A) that extends in the extension direction and allows a heat medium to flow in the first heat exchanger (32A); and
a first recess (71A) formed to decrease a flow path area of the first heat medium path (53A),
the second heat exchanger (32B) includes:
a second heat medium path (53B) that extends in the extension direction and allows the heat medium to flow in the second heat exchanger (32B); and
a second recess (71B) formed to decrease a flow path area of the second heat medium path (53B), and
a depth of the first recess (71A) is different from a depth of the second recess (71B).

2. The power storage device (2) according to claim 1, wherein
the first heat exchanger (32A) and the second heat exchanger (32B) are spaced apart from each other in an arrangement direction,
the plurality of power storage cells (29) include a first power storage cell (29A) and a second power storage cell (29B) that are disposed between the first heat exchanger (32A) and the second heat exchanger (32B),
in a flow direction of the heat medium, the second power storage cell (29B) is disposed downstream of the first power storage cell (29A) with a space being interposed therebetween,
in the flow direction of the heat medium, the first recess (71A) is formed upstream of the first power storage cell (29A), and
in the flow direction of the heat medium, the second recess (71B) is formed upstream of the first power storage cell (29A).

3. The power storage device (2) according to claim 1, wherein
the first heat exchanger (32A) and the second heat exchanger (32B) are spaced apart from each other in an arrangement direction,
the plurality of power storage cells (29) include a first power storage cell (29A) and a second power storage cell (29B) that are disposed between the first heat exchanger (32A) and the second heat exchanger (32B),
in a flow direction of the heat medium, the first recess (71A) is formed between the first power storage cell (29A) and the second power storage cell (29B), and
in the flow direction of the heat medium, the second recess (71B) is formed between the first power storage cell (29A) and the second power storage cell (29B).

4. The power storage device (2) according to claim 1, wherein
a third recess (72A) located downstream of the first recess (71A) in a flow direction of the heat medium is formed in the first heat exchanger (32A),
a fourth recess (72B) located downstream of the second recess (71B) in the flow direction of the heat medium is formed in the second heat exchanger (32B),
the plurality of power storage cells (29) include a first power storage cell (29A) and a second power storage cell (29B) that are disposed between the first heat exchanger (32A) and the second heat exchanger (32B),
in the flow direction of the heat medium, the second power storage cell (29B) is disposed downstream of the first power storage cell (29A) with a space being interposed therebetween,
in the flow direction of the heat medium, the first recess (71A) is formed upstream of the first power storage cell (29A) and the third recess (72A) is formed between the first power storage cell (29A) and the second power storage cell (29B), and
in the flow direction of the heat medium, the second recess (71B) is formed upstream of the first power storage cell (29A) and the fourth recess (72B) is formed between the first power storage cell (29A) and the second power storage cell (29B).

5. The power storage device (2) according to any one of claims 1 to 4, further comprising
a supply pipe (35) that supplies the heat medium to the first heat exchanger (32A) and the second heat exchanger (32B), wherein
in a flow direction of the heat medium flowing in the supply pipe (35), the first heat exchanger (32A) is disposed upstream of the second heat exchanger (32B), and
the depth of the first recess (71A) is deeper than the depth of the second recess (71B).

6. The power storage device (2) according to claim 4, further comprising
a supply pipe (35) that supplies the heat medium to the first heat exchanger (32A) and the second heat exchanger (32B), wherein
in a flow direction of the heat medium flowing in the supply pipe (35), the first heat exchanger (32A) is disposed upstream of the second heat exchanger (32B),
the depth of the first recess (71A) is deeper than the depth of the second recess (71B), and
a depth of the third recess (72A) is deeper than a depth of the fourth recess (72B).

7. The power storage device (2) according to claim 1, wherein
a first flow path (53A) through which the heat medium flows is formed in the first heat exchanger (32A),
the first flow path (53A) includes a plurality of first narrow paths (54A) arranged in a height direction,
a second flow path (53A) through which the heat medium flows is formed in the second heat exchanger (32B),
the second flow path (53A) includes a plurality of second narrow paths (54A) arranged in the height direction,
the first recess (71A) is formed to narrow at least one of the plurality of first narrow paths (54A), and
the second recess (71B) is formed to narrow at least one of the plurality of second narrow paths (54A).
